# EUROPÄISCHE PATENTSCHRIFT

(11) **EP 3 679 417 B1**
(45) Veröffentlichungstag und Bekanntmachung des Hinweises auf die Patenterteilung: **01.05.2024**
(21) Anmeldenummer: 18810910.2
(22) Anmeldetag: 15.11.2018
(51) Int. Cl.: G02B 27/01, G06F 3/0488, G06F 3/01

(54) **SICHERE BRILLENARTIGE VORRICHTUNG UND VERFAHREN**
SECURE SPECTACLE-TYPE DEVICE AND METHOD
DISPOSITIF SOUS LA FORME DE LUNETTE FIABLE ET PROCÉDÉ

(30) Priorität: 07.12.2017 EP 17205836
(43) Veröffentlichungstag der Anmeldung: 15.07.2020
(73) Patentinhaber: Siemens Aktiengesellschaft, 80333 München (DE)
(72) Erfinder: GLASER, Maximilian, 91365 Weilersbach (DE); KERSTEN, Thomas, 91080 Marloffstein (DE); SINGER, Marc, 91301 Forchheim (DE)
(74) Vertreter: Siemens Patent Attorneys
(86) Internationale Anmeldenummer: PCT/EP2018/081315
(87) Internationale Veröffentlichungsnummer: WO 2019/110263

(56) Entgegenhaltungen:
- EP-A1- 2 843 507
- US-A1- 2013 050 069
- US-A1- 2015 206 347

## Beschreibung

Die Erfindung betrifft eine brillenartige Vorrichtung sowie ein Verfahren zur Darstellung eines Gesamtbildes und zum Ausführen einer Aktion mit einer brillenartigen Vorrichtung. Als sichere Eingabegeräte dienen, insbesondere aus Sicherheitsgründen, heute nur redundant ausgeführte Taster, Schalter oder andere anwendungsspezifische Zusatzkomponenten. Diese sind meist fest mit einer Maschine - z. B. Werkzeugmaschine - verbunden und nicht flexibel verwendbar.

Als sichere Anzeigegeräte dienen heute hauptsächlich einfache Systeme wie Lampen oder Bedruckungen. Auch Bildschirme können Anzeigen sicher wiedergeben. Dies ist jedoch mit hohem Aufwand verbunden. Die Bildschirme sind zudem fest mit einer Maschine verbunden.

Geräte, die eine sichere Eingabe und eine sichere Anzeige vereinen, gibt es, insbesondere im Bereich der Werkzeugmaschinen, bisher nicht. Zudem gibt es keine derartigen Geräte, die portabel sind.

Die Patentschrift DE 19625028 C1 beschreibt eine brillenartige Vorrichtung zur Einblendung von Zusatzinformationen in den Sichtbereich einer Person unter Verwendung einer visuellen Informationen ausstrahlenden Signalquelle sowie eines diese Informationen in den Sichtbereich projizierenden optischen Systems.

Aus der US 2015/206347 A1 ist ein System beschrieben, das die Blendung in Augmented Reality reduziert. Hierzu wird ein Verfahren zum Erzeugen eines modifizierten Bildes eines Objekts das Empfangen von ersten Bilddaten vorgeschlagen. Die ersten Bilddaten entsprechen einem ersten Licht, das von dem Objekt durch ein klares Filter reflektiert wird. Zweite Bilddaten entsprechen einem zweiten Licht, das von dem Objekt durch ein Polarisationsfilter reflektiert wird. Durch das Kombinieren der ersten Bilddaten und der zweiten Bilddaten werden modifizierte Bilddaten und ein modifiziertes Bild des Objekts erzeugt, wobei sich das modifizierte Bild vom ersten Bild und vom zweiten Bild unterscheiden kann.

Die US 2013/050069 A1 betrifft Vorrichtungen zur Verwendung beim Anzeigen einer Benutzerschnittstelle bereit, umfassend: einen Rahmen, eine mit dem Rahmen montierte Linse, eine erste Kamera, einen Detektor und einen Prozessor, konfiguriert zum: Verarbeiten von Bildern, die von der ersten Kamera empfangen wurden, und erfassten Daten, die von der Kamera empfangen wurden, einen Detektor zum Erkennen einer Handbewegung in Bezug auf einen dreidimensionalen (3D-) Raum in einem Sichtfeld der ersten Kamera und des Erfassungsbereichs des Detektors aus zumindest der Verarbeitung des Bildes; Identifizieren von virtuellen X-, Y- und Z-Koordinaten aus der Verarbeitung des Bildes und der erfassten Daten im 3D-Raum von mindestens einem Teil der Hand, der die Geste ausführt; Identifizieren eines Befehls, der der erfassten Geste und dem dreidimensionalen Ort des Teils der Hand entspricht.

Der Erfindung liegt die Aufgabe zugrunde, eine sichere Eingabe und eine sichere Anzeige mittels einer portablen Vorrichtung zu ermöglichen.

Die Lösung der Aufgabe gelingt durch eine brillenartige Vorrichtung mit den Merkmalen gemäß Anspruch 1, d.h. eine Brillenartige Vorrichtung zur sicheren Bedienung einer Werkzeugmaschine, einer Produktionsmaschine und/oder eines Roboters umfassend:
- eine erste Recheneinheit und eine von der ersten Recheneinheit unabhängige zweite Recheneinheit,
- eine erste Anzeigeeinheit und eine von der ersten Anzeigeeinheit unabhängige zweite Anzeigeeinheit,
- eine erste Erfassungseinheit und eine von der ersten unabhängige zweite Erfassungseinheit,

wobei die erste Erfassungseinheit zur Erfassung eines ersten Umgebungsbereichs eines Bedieners, zur Umwandlung des ersten Umgebungsbereichs in eine erste von der ersten Recheneinheit verarbeitbare erste Bildinformation und zur Übergabe der ersten Bildinformation an die erste Recheneinheit vorgesehen ist,
wobei die zweite Erfassungseinheit zur Erfassung eines zweiten Umgebungsbereichs des Bedieners, zur Umwandlung des zweiten Umgebungsbereichs in eine von der zweiten Recheneinheit verarbeitbare zweite Bildinformation und zur Übergabe der zweiten Bildinformation an die zweite Recheneinheit vorgesehen ist,
wobei sich der erste Umgebungsbereich und der zweite Umgebungsbereich überschneiden,
wobei die erste Recheneinheit zur Generierung eines ersten Teilbildes vorgesehen ist,
wobei die erste Recheneinheit zur Übergabe des ersten Teilbildes an die erste Anzeigeeinheit vorgesehen ist,
wobei die erste Anzeigeeinheit zur Anzeige des ersten Teilbildes vorgesehen ist,
wobei die zweite Recheneinheit zur Generierung eines zweiten Teilbildes vorgesehen ist,
wobei die zweite Recheneinheit zur Übergabe des zweiten Teilbildes an die zweite Anzeigeeinheit vorgesehen ist,
wobei die zweite Anzeigeeinheit zur Anzeige des zweiten Teilbildes vorgesehen ist,
wobei die brillenartige Vorrichtung zur zweikanaligen Erzeugung und Darstellung eines Gesamtbildes mittels Überlagerung des ersten Teilbildes und des zweiten Teilbildes vorgesehen ist,
wobei die brillenartige Vorrichtung eine der ersten und der zweiten Recheneinheit übergeordnete Recheneinheit zum Vergleichen der ersten Bildinformation und der zweiten Bildinformation aufweist,
wobei die brillenartige Vorrichtung als Schnittstelle zwischen einem Bediener und der Werkzeugmaschine, der Produktionsmaschine und/oder dem Roboter zur Ausführung einer Aktion durch den Bediener ausgeführt ist, so dass bei Übereinstimmung der ersten Bildinformation und der zweiten Bildinformation vom Bediener eine sichere Aktion als sichere Bedienung der Werkzeugmaschine, der Produktionsmaschine und/oder des Roboters in die Wege geleitet wird und bei Nichtübereinstimmung der ersten Bildinformation und der zweiten Bildinformation die Aktion nicht ausgeführt oder gestoppt wird.

Weitere vorteilhafte Ausführungsformen der Erfindung ergeben sich aus den Unteransprüchen 2 bis 8.

Ferner gelingt die Lösung der Aufgabe durch ein Verfahren gemäß Anspruch 9, d.h. ein Verfahren zur Darstellung eines Gesamtbildes und zum Ausführen einer Aktion mit einer brillenartigen Vorrichtung nach einem der Ansprüche 1 bis 8, wobei das Ausführen der Aktion zweikanalig erfolgt, wobei zweikanalig bezüglich des Ausführens der Aktion bedeutet, dass ein virtueller Schalter oder Taster mit dem Finger des Bedieners betätigt wird, um die Aktion herbeizuführen, wobei von der ersten Erfassungseinheit der erste Umgebungsbereich erfasst und dies in die erste Bildinformation umgewandelt wird und wobei von der zweiten Erfassungseinheit der zweite Umgebungsbereich erfasst und dies in die zweite Bildinformation umgewandelt wird und wobei die erste Bildinformation mittels der Datenverbindung zwischen der ersten Erfassungseinheit und der ersten Recheneinheit an die erste Recheneinheit übergeben wird und die zweite Bildinformation mittels der Datenverbindung zwischen der zweiten Erfassungseinheit und der zweiten Recheneinheit an die zweite Recheneinheit übergeben wird, wobei die brillenartige Vorrichtung eine der ersten und der zweiten Recheneinheit übergeordnete Recheneinheit zum Vergleichen der ersten Bildinformation und der zweiten Bildinformation aufweist, wobei von der übergeordneten Recheneinheit die erste Bildinformation mit der zweiten Bildinformation verglichen wird und bei Übereinstimmung die Ausführung der Aktion in die Wege geleitet und vom Bediener eine sichere Aktion als sichere Bedienung der Werkzeugmaschine, der Produktionsmaschine und/oder des Roboters ausgeführt wird und wobei bei Nichtübereinstimmung der ersten Bildinformation und der zweiten Bildinformation die Aktion nicht ausgeführt oder gestoppt wird.

Weitere vorteilhafte Ausführungsformen der Erfindung ergeben sich aus den Unteransprüchen 10 bis 14.

Die genannte Reihenfolge der in den Verfahrensansprüchen genannten Schritte ist nicht obligatorisch. Die Schritte können auch in einer anderen Reihenfolge ausgeführt werden.

Sicher bedeutet hierbei, dass die brillenartige Vorrichtung und/oder das Verfahren zur Darstellung eines Gesamtbildes und/oder zum Ausführen einer Aktion mit einer brillenartigen Vorrichtung ausfallsicher bzw. versagenssicher sind.

Diese Sicherheit wird vorzugsweise durch Redundanz erreicht.

Die brillenartige Vorrichtung umfasst redundant ausgeführte Komponenten wie beispielsweise die erste Recheneinheit und die zweite Recheneinheit.

Das Verfahren zur Darstellung eines Gesamtbildes und/oder zum Ausführen einer Aktion mit einer brillenartigen Vorrichtung basiert zudem auf eben dieser Redundanz.

Erfindungsgemäß ist die brillenartige Vorrichtung derart ausgebildet, eine Werkzeugmaschine und/oder eine Produktionsmaschine und/oder einen Roboter zu bedienen.

Werkzeugmaschinen sind Maschinen zur Fertigung von Werkstücken mit Werkzeugen, deren Bewegung zueinander durch die Maschine vorgegeben wird. Zu den Werkzeugmaschinen zählen mitunter Drehmaschinen, Fräsmaschinen, Schneidmaschinen, Erodiermaschinen, Pressen und Maschinenhämmer. Häufig sind Werkzeugmaschinen als CNC-Maschinen (Computerized Numerical Control) ausgeführt und verfügen über eine rechnergestützte numerische Steuereinheit, mittels welcher Werkstücke automatisiert und komplexe Formen mit hoher Präzision hergestellt werden können.

Produktionsmaschinen sind Maschinen, die zur Produktion von unterschiedlichen Dingen eingesetzt werden. Hierzu zählen beispielsweise Produktionsmaschinen zum Druck von Zeitungen, Produktionsmaschinen, die Gegenstände mittels additiver Fertigung produzieren, Spritzgussmaschinen, Produktionsmaschinen in der Lebensmittel- bzw. Getränkeindustrie, Papiermaschinen zur Herstellung von Papier, Karton und/oder Pappe und Produktionsmaschinen zur Produktion von Metallen und/oder Blechen.

Roboter, insbesondere Industrieroboter, sind programmierbare Maschinen zur Handhabung, Montage und/oder Bearbeitung von Werkstücken. Sie werden häufig in der Luftfahrt, Automobilindustrie, Kunststoff-, Blech- oder Metallverarbeitung, Lebensmittel- und Getränkeindustrie, Medizintechnik, Pharma- und Kosmetikindustrie sowie in anderen elektrotechnischen Gebieten eingesetzt. Zu den Hauptaufgaben von Industrierobotern zählen Montieren, Greifen, allgemeine Handhabung, Be- und Entladen, Maschinenbeschickung, Lackieren, Palettieren, Positionierung, Fräsen, Schleifen, Polieren und/oder Schweißen. Im industriellen Umfeld erfreuen sie sich zunehmender Beliebtheit, da sie Werkstücke automatisiert und präzise bearbeiten können und dabei flexibler einsetzbar sind als etwa Werkzeugmaschinen.

Vorzugsweise ist der Bediener einer Werkzeugmaschine und/oder einer Produktionsmaschine und/oder eines Roboters in einer Industriehalle in Bewegung und/oder benötigt freie Hände zur Bedienung wenigstens einer der genannten Maschinen und/oder um sicher und effizient arbeiten zu können. Häufig wechselt der Bediener zwischen zwei oder mehr Maschinen und benötigt daher stets aktuelle Daten, die ihm vorteilhaft in Echtzeit angezeigt werden.

In einer weiteren vorteilhaften Ausführungsform der Erfindung ist die erste und/oder die zweite Anzeigeeinheit als Display und/oder als Projektor ausgeführt.

In einer weiteren vorteilhaften Ausführungsform der Erfindung ist die brillenartige Vorrichtung vom Bediener als Head-Mounted-Display tragbar.

Vorzugsweise ist die brillenartige Vorrichtung am Kopf des Bedieners befestigt.

Die brillenartige Vorrichtung kann jedoch auch als Head-Up-Display ausgeführt sein. Zudem sind auch andere Anzeigesysteme denkbar.

Das Display ist vorzugsweise ein Gerät zur Anzeige des Teilbildes, das auf LED-Technik (LED = light-emitting diode) - beispielsweise ein OLED-Display (OLED = organic light-emitting diode)- und/oder LCD-Technik (LCD = liquid crystal display) - beispielsweise ein TFT-Display (FTF = thin-film transitor) - basiert.

Der Projektor projiziert das anzuzeigende Teilbild direkt auf die Netzhaut eines Auges.

Erfindungsgemäß ist die brillenartige Vorrichtung binokular ausgeführt. Hierbei zeigt die erste Anzeigeeinheit das erste Teilbild und die zweite Anzeigeeinheit das zweite Teilbild.

In einer weiteren vorteilhaften Ausführung der Erfindung zeigt die erste Anzeigeeinheit das erste Teilbild einem ersten Auge des Bedieners an, die zweite Anzeigeeinheit zeigt das zweite Teilbild einem zweiten Auge des Bedieners an.

Die erste Recheneinheit generiert hierbei das erste Teilbild. Die erste Recheneinheit übergibt das erste Teilbild, vorzugsweise mittels einer Datenverbindung "Erste Recheneinheit - Erste Anzeigeeinheit", an die Anzeigeeinheit. Die Anzeigeeinheit zeigt das erste Teilbild an.

Die zweite Recheneinheit generiert hierbei das zweite Teilbild. Die zweite Recheneinheit übergibt das zweite Teilbild, vorzugsweise mittels einer Datenverbindung "Zweite Recheneinheit - zweite Anzeigeeinheit", an die Anzeigeeinheit. Die Anzeigeeinheit zeigt das erste Teilbild an.

Jede Datenverbindung kann kabellos oder festverdrahtet ausgeführt sein.

Vorzugsweise zeigen die erste Anzeigeeinheit und die zweite Anzeigeeinheit gleichzeitig einen identischen Bildinhalt aus zwei unterschiedlichen Perspektiven bzw. zwei unterschiedlichen Positionen, sodass im Gehirn des Bedieners mittels Überlagerung des ersten Teilbilds und des zweiten Teilbilds ein räumlicher Eindruck bzw. ein Eindruck von Tiefe (auch 3D-Effekt genannt) erzeugt wird.

Das erste und das zweite Teilbild werden hierbei unabhängig voneinander generiert und zweikanalig übertragen. Dies gewährleistet eine sichere Darstellung des Gesamtbildes, welches vom Bediener als ordnungsgemäßes Gesamtbild erkennbar ist.

Für den Bediener ist erkennbar, wenn ein oder beide Teilbilder fehlerhaft sind. Fällt beispielsweise die erste Recheneinheit aus, kann das erste Teilbild nicht generiert werden. Der Bediener ist somit auf dem ersten Auge "blind". Der Bediener erkennt dadurch ein fehlerhaftes Gesamtbild und somit eine Störung der brillenartigen Vorrichtung.

Arbeitet die erste Recheneinheit beispielsweise verzögert, fehlt dem Bediener der räumliche Eindruck im Gesamtbild, da die beiden Teilbilder verzögert und nicht gleichzeitig angezeigt werden.

Vorzugsweise zeigen die beiden Anzeigeeinheiten optische Warnsignale und/oder Erinnerungen an. Der Bediener kann sich auf zeitkritische, wichtige Aufgaben konzentrieren und hat hierbei seine Hände frei. Warnsignale werden dem Bediener angezeigt und können nicht versehentlich übersehen werden oder z. B. bei Umgebungslärm überhört werden.

Erfindungsgemäß ist die brillenartige Vorrichtung als Schnittstelle zwischen dem Bediener und der Werkzeugmaschine ausgeführt.

Die Anzeigeeinheiten zeigen vorzugsweise ein virtuelles HMI (HMI = human machine interface) an, womit die Werkzeugmaschine und/oder die Produktionsmaschine und/oder der Roboter bedient werden können. Beispielsweise können die Aktionen "Start", "Stop" und/oder "Not-Aus" ausgelöst bzw. ausgeführt werden.

In einer weiteren vorteilhaften Ausführung der Erfindung ist die erste und/oder die zweite Erfassungseinheit als Kamera ausgeführt.

Vorzugsweise sind die beiden Erfassungseinheiten an unterschiedlichen Positionen angeordnet. Vorzugsweise erfasst die erste Erfassungseinheit eine erste Perspektive und die zweite Erfassungseinheit erfasst eine zweite Perspektive, die von der ersten Perspektive verschieden ist.

Auf diese Weise kann ein Objekt mit drei Koordinaten (X-Koordinate, Y-Koordinate, Z-Koordinate) im Raum erfasst werden. In einer weiteren vorteilhaften Ausführung der Erfindung erfasst die als Kamera ausgeführte Erfassungseinheit wenigstens zwei Dimensionen.

Beispielsweise erfasst die erste Erfassungseinheit die X-Koordinate und die Y-Koordinate eines Objekts im ersten Umgebungsbereich (also die erste Bildinformation) und die zweite Erfassungseinheit erfasst die X-Koordinate und die Z-Koordinate (also die zweite Bildinformation) des Objekts im zweiten Umgebungsbereich. Somit ist eine Tiefenerkennung im Raum sichergestellt.

Erfindungsgemäß ist der ersten Recheneinheit und der zweiten Recheneinheit eine übergeordnete Recheneinheit übergeordnet, zum Vergleichen der ersten Bildinformation und der zweiten Bildinformation.

Eine Auswertung des Vergleichsergebnisses lässt eine ordnungsgemäße Funktion bzw. eine Störung der brillenartigen Vorrichtung erkennen.

Vorzugsweise weist das bereits beschriebene virtuelle HMI wenigstens einen virtuellen Schalter oder Taster auf. Der virtuelle Schalter oder Taster ist vorzugsweise derart ausgebildet die Aktion "Start" und/oder die Aktion "Stop" und/oder die Aktion "Not-Aus" auszuführen. Jedoch sind auch andere Aktionen denkbar.

Vorzugsweise ist jeder Aktion ein Taster oder Schalter zugewiesen. Jedoch sind auch Mehrfachbelegungen eines Tasters oder Schalters mit wenigstens zwei Aktionen möglich.

Vorzugsweise betätigt der Bediener mit einem Finger einen virtuellen Schalter oder Taster, um eine Aktion herbeizuführen. Die erste Erfassungseinheit erfasst hierbei den ersten Umgebungsbereich und wandelt dies in eine erste Bildinformation um, die zweite Erfassungseinheit umfasst den zweiten Umgebungsbereich und wandelt dies in eine zweite Bildinformation um.

Das Objekt, also der Finger, kann wie oben beschrieben auf diese Weise im Raum erfasst werden. Der Finger wird vorzugsweise aus zwei verschiedenen Perspektiven von den beiden Erfassungseinheiten erfasst.

Erfindungsgemäß übergibt die erste Erfassungseinheit, vorzugsweise mittels einer Datenverbindung "Erste Erfassungseinheit - Erste Recheneinheit", die erste Bildinformation an die erste Recheneinheit. Erfindungsgemäß übergibt die zweite Erfassungseinheit, vorzugsweise mittels einer Datenverbindung "Zweite Erfassungseinheit - Zweite Recheneinheit", die zweite Bildinformation an die zweite Recheneinheit.

Erfindungsgemäß übergibt die erste Recheneinheit, vorzugsweise mittels einer Datenverbindung "Erste Recheneinheit - Übergeordnete Recheneinheit", die erste Bildinformation an die übergeordnete Recheneinheit. Beispielsweise beinhaltet die erste Bildinformation Angaben über X-Koordinaten und Y-Koordinaten des Fingers.

Erfindungsgemäß übergibt die zweite Recheneinheit, vorzugsweise mittels einer Datenverbindung "Zweite Recheneinheit - Übergeordnete Recheneinheit", die zweite Bildinformation an die übergeordnete Recheneinheit. Beispielsweise beinhaltet die zweite Bildinformation Angaben über X-Koordinaten und Z-Koordinaten des Fingers.

Erfindungsgemäß vergleicht die übergeordnete Recheneinheit die beiden Bildinformationen und leitet bei Übereinstimmung eine Ausführung der Aktion in die Wege. Auf diese Weise ist die Aktion sicher und zweikanalig ausführbar.

Anknüpfend an das eben genannte Beispiel vergleicht die übergeordnete Recheneinheit beispielsweise die X-Koordinaten der beiden Bildinformationen.

In einer weiteren vorteilhaften Ausführungsform der Erfindung ist die brillenartige Vorrichtung als eine Virtual-Reality-Brille oder Augmented-Reality-Brille ausgebildet.

Virtual Reality (VR) ist eine Simulation einer dreidimensionalen Umgebung, in der sich der Bediener frei umsehen und mit der der Bediener interagieren kann. Die Simulation gibt ihm und seinen Sinnen das Gefühl, sich mit dem ganzen Körper darin zu befinden. Es handelt sich hierbei um eine künstliche, virtuelle Welt. Die Virtual-Reality-Brille zeigt eine gänzlich virtuelle Umgebung an.

Augmented Reality (AR) stellt eine Verbindung von realer Welt und computergenerierten Inhalten dar. Eine sogenannte "See-Through"-Datenbrille ermöglicht dem Benutzer z. B., seine reale Umgebung wahrzunehmen, während virtuelle, computergenerierte Inhalte und/oder Informationen eingeblendet werden.

Jedoch besteht bei AR-Brillen auch die Möglichkeit, die reale Umgebung mit wenigstens einer Kamera zu erfassen und diese, vorzugsweise zusammen mit virtuellen Inhalten und/oder Informationen, über eine Anzeigeeinheit dem Bediener sichtbar zu machen.

Ferner kann die brillenartige Vorrichtung auch als Mixed-Reality-Brille ausgebildet sein.

Ferner besteht die Möglichkeit, eine konventionelle AR- oder VR-Brille mit additiver Hardware aufzurüsten, um eine erfindungsgemäße brillenartige Vorrichtung zu schaffen.

In einer weiteren vorteilhaften Ausführungsform der Erfindung dient das erfindungsgemäße Verfahren einem Bedienen der Werkzeugmaschine und/oder der Produktionsmaschine und/oder des Roboters.

In einer weiteren vorteilhaften Ausführungsform der Erfindung erfolgen die Darstellung des Gesamtbildes und/oder das Ausführen der Aktion zweikanalig.

Zweikanalig bezüglich der Darstellung des Gesamtbildes bedeutet hierbei vorzugsweise: Das erste Teilbild und das zweite Teilbild werden unabhängig voneinander generiert. Das erste Teilbild wird in der ersten Recheneinheit generiert, das zweite Teilbild wird in der zweiten Recheneinheit generiert. Vorzugsweise mittels der Datenverbindung "Erste Recheneinheit - Erste Anzeigeeinheit" wird das erste Teilbild von der ersten Recheneinheit an die erste Anzeigeeinheit übergeben. Vorzugsweise mittels der Datenverbindung "Zweite Recheneinheit - Zweite Anzeigeeinheit" wird das zweite Teilbild von der zweiten Recheneinheit an die zweite Anzeigeeinheit übergeben.

Durch die zweikanalige Darstellung kann das Gesamtbild sicher dargestellt werden. Der Bediener erkennt durch ein fehlerhaftes Gesamtbild, dass eine Störung der brillenartigen Vorrichtung vorliegt.

Zweikanalig bezüglich des Ausführens der Aktion bedeutet hierbei vorzugsweise: Vorzugsweise wird der virtuelle Schalter oder Taster mit dem Finger des Bedieners betätigt, um eine Aktion herbeizuführen. Von der ersten Erfassungseinheit wird der erste Umgebungsbereich erfasst und dies in die erste Bildinformation umgewandelt. Von der zweiten Erfassungseinheit wird der zweite Umgebungsbereich erfasst und dies in die zweite Bildinformation umgewandelt. Die erste Bildinformation wird vorzugsweise mittels der Datenverbindung "Erste Erfassungseinheit - Erste Recheneinheit" an die erste Recheneinheit übergeben. Die zweite Bildinformation wird vorzugsweise mittels der Datenverbindung "Zweite Erfassungseinheit - Zweite Recheneinheit" an die zweite Recheneinheit übergeben.

Vorzugsweise wird die erste Bildinformation von der ersten Recheneinheit, vorzugsweise mittels der Datenverbindung "Erste Recheneinheit - Übergeordnete Recheneinheit", an die übergeordnete Recheneinheit übergeben. Vorzugsweise wird die zweite Bildinformation von der zweiten Recheneinheit, vorzugsweise mittels der Datenverbindung "Zweite Recheneinheit - Übergeordnete Recheneinheit", an die übergeordnete Recheneinheit übergeben.

Erfindungsgemäß wird von der übergeordneten Recheneinheit die erste Bildinformation mit der zweiten Bildinformation verglichen. Bei Übereinstimmung wird die Ausführung der Aktion in die Wege geleitet.

Durch die zweikanalige Erfassung kann die Aktion sicher ausgeführt werden.

In einer weiteren vorteilhaften Ausführungsform der Erfindung wird ein fehlerhaftes Gesamtbild - wie bereits erläutert - vom Bediener erkannt.

In einer weiteren vorteilhaften Ausführungsform der Erfindung wird die Aktion als Reaktion auf eine durch den Bediener veranlasste Bedienhandlung ausgeführt.

Vorzugsweise stellt das Betätigen des virtuellen Schalters oder Tasters mit dem Finger (Berührung) des Bedieners die Bedienhandlung dar. Jedoch kann der Schalter oder Taster auch auf andere Weise betätigt werden.

Ferner sind auch andere Bedienhandlungsarten möglich wie z. B. ein Sprachbefehl.

In einer weiteren vorteilhaften Ausführungsform der Erfindung wird die Bedienhandlung als Geste ausgeführt.

Vorzugsweise sind Gesten Bewegungen von Körperteilen, insbesondere von einem oder mehreren Arm bzw. Armen und/oder einer oder mehreren Hand bzw. Händen.

Jedoch sind auch andere Bewegungen möglich, z. B. Kopfbewegungen, Fuß- und/oder Beinbewegungen.

Die Erfindung bietet den Vorteil, dass die heute mit der Werkzeugmaschine und/oder der Produktionsmaschine und/oder dem Roboter fest verbundenen Schalter, Taster oder anwendungsspezifischen Zusatzkomponenten nicht mehr benötigt werden. Ein Kunde spart auf diese Weise Kosten sowohl für eine Beschaffung als auch für eine Instandhaltung ein.

Zudem kann der Bediener stets auf aktuelle, die jeweilige Maschine betreffende Daten in Echtzeit zugreifen, wodurch eine Produktivität gesteigert und Zeit eingespart wird.

Im Folgenden wird die Erfindung anhand der in den Figuren dargestellten Ausführungsbeispiele näher beschrieben und erläutert. Es zeigen:
- FIG 1: eine Ausgestaltung einer erfindungsgemäßen brillenartigen Vorrichtung,
- FIG 2: ein erfindungsgemäßes Verfahren zum Ausführen einer Aktion,
- FIG 3: ein erfindungsgemäßes Verfahren zur Darstellung eines Gesamtbildes und
- FIG 4: einen Bediener mit einer brillenartigen Vorrichtung vor einer Werkzeugmaschine sowie ein eingeblendetes Projektionsabbild.

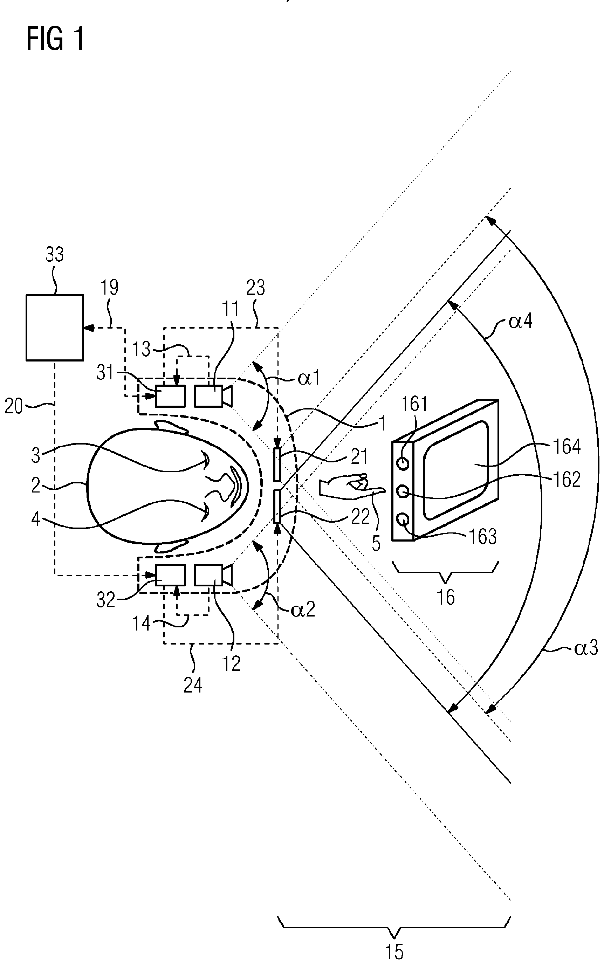

FIG 1 zeigt eine Ausgestaltung einer erfindungsgemäßen brillenartigen Vorrichtung 1. Die brillenartige Vorrichtung 1 wird in der Figur am Kopf eines Bedieners 2 getragen. Vorteilhaft ist die brillenartige Vorrichtung 1 als Head-Mounted-Display ausgeführt.

Die brillenartige Vorrichtung 1 weist zwei Anzeigeeinheiten auf. Die Anzeigeeinheiten können als Display 21 bzw. 22 oder als Projektor ausgeführt sein.

Die brillenartige Vorrichtung 1 weist in der Figur ein erstes Display 21 und ein zweites Display 22 auf. Das erste Display 21 zeigt einem ersten Auge 3 ein erstes Teilbild an. Das zweite Display 22 zeigt einem zweiten Auge 4 ein zweites Teilbild an.

Die brillenartige Vorrichtung 1 weist zudem eine erste Erfassungseinheit auf, die als erste Kamera 11 ausgeführt ist. Zudem weist die brillenartige Vorrichtung 1 eine zweite Erfassungseinheit auf, die als zweite Kamera 12 ausgeführt ist.

Vorzugsweise kann jede Kamera 11 bzw. 12 zwei Dimensionen erfassen.

Die brillenartige Vorrichtung 1 weist zudem eine erste Recheneinheit 31 sowie eine zweite Recheneinheit 32 auf.

Die erste Kamera 11 erfasst einen ersten Umgebungsbereich α1 des Bedieners 2, die zweite Kamera 12 erfasst einen zweiten Umgebungsbereich α2. Die beiden Umgebungsbereiche α1 und α2 grenzen zumindest aneinander an. Vorzugsweise überschneiden sich jedoch die beiden Umgebungsbereiche α1 und α2, wie in der Figur gezeigt ist.

Die erste Kamera 11 wandelt den ersten Umgebungsbereich α1 in eine erste Bildinformation um. Die erste Bildinformation kann von der ersten Recheneinheit 31 verarbeitet werden.

Die zweite Kamera 12 wandelt den zweiten Umgebungsbereich α2 in eine zweite von der zweiten Recheneinheit verarbeitbare Bildinformation um.

Die erste Kamera übergibt die erste Bildinformation über eine Datenverbindung 13 an die erste Recheneinheit. Die zweite Kamera 12 übergibt die zweite Bildinformation an die zweite Recheneinheit 32 über die Datenverbindung 14.

Die Datenverbindungen können sowohl mit einer physikalischen Verbindung oder auch kabellos ausgeführt sein.

Die erste Recheneinheit 31 generiert ein erstes Teilbild und übergibt über die Datenverbindung 32 das erste Teilbild an das erste Display 21.

Die zweite Recheneinheit 32 generiert ein zweites Teilbild und übergibt über die Datenverbindung 24 das zweite Teilbild an das zweite Display 22.

Das erste Display 21 bildet den in der Figur gezeigten Blickwinkel α3 ab. Das zweite Display 22 bildet den in der Figur gezeigten Blickwinkel α4 ab. Die beiden Blickwinkel α3 und α4 überschneiden sich und bilden ein für den Bediener sichtbares Projektionsabbild 15 ab.

Wie in der Figur gezeigt sieht ein erstes Auge 3 den Blickwinkel α3 und ein zweites Auge 4 den Blickwinkel α4. Somit werden das erste Teilbild im Blickwinkel α3 und das zweite Teilbild im Blickwinkel α4 überlagert, wodurch ein Gesamtbild entsteht. Ein ordnungsgemäßes Gesamtbild kann vom Bediener 2 erkannt werden. Hierbei kann auch ein fehlerhaftes Gesamtbild vom Bediener 2 erkannt und somit eine Störung der brillenartigen Vorrichtung erkannt werden.

In der Figur zeigt das virtuelle Projektionsabbild 15 ein virtuelles Human Machine Interface (HMI) 16. Das Projektionsabbild 15 entspricht dem Gesamtbild. Das HMI 16 dient beispielsweise einer Interaktion von Bediener 2 mit einer Werkzeugmaschine.

Die erste und die zweite Kamera 11 und 12 können eine Umgebung des Bedieners erfassen. Die erste Kamera erfasst hierbei einen ersten Umgebungsbereich α1, die zweite Kamera erfasst hierbei einen zweiten Umgebungsbereich α2. Über die Datenverbindungen 13 und 14 werden die erste Bildinformation und die zweite Bildinformation an die erste Recheneinheit 31 und die zweiten Recheneinheit 32 übergeben.

Beispielsweise kann eine Recheneinheit bzw. können beide Recheneinheiten 31 und 32 erkennen, vor welcher Maschine, beispielsweise Werkzeugmaschine, der Bediener 2 steht und ein zugehöriges HMI einblenden. Hierbei berechnet die erste Recheneinheit 31 ein erstes Teilbild und übergibt es mittels der Datenverbindung 23 an das erste Display 21. Die zweite Recheneinheit 32 generiert ein zweites Teilbild und übergibt es mittels der Datenverbindung 24 an das zweite Display 22.

Die beiden Displays 21 und 22 zeigen die jeweiligen Teilbilder an. Vorzugsweise entspricht das erste Teilbild dem zweiten Teilbild. Ist eines der beiden Teilbilder fehlerhaft, erkennt dies der Bediener 2 sofort, da die beiden Teilbilder kein ordnungsgemäßes Gesamtbild ergeben. Auf diese Weise erkennt der Bediener 2 eine Störung der brillenartigen Vorrichtung 1. Dies ermöglicht eine sichere Bedienung der Maschine, z. B. der Werkzeugmaschine.

Fällt beispielsweise eines der beiden Displays 21 bzw. 22 aus, erkennt das der Bediener 2, da er auf einem Auge "blind" ist. Durch die Überlagerung der beiden Teilbilder entsteht zudem ein dreidimensionales Projektionsabbild 15.

Wie in der Figur gezeigt umfasst das virtuelle HMI 16 eine virtuelle HMI-Anzeige 164 und drei virtuelle Knöpfe 161, 162 und 163. Die virtuellen Knöpfe sind beispielsweise als Schalter oder Taster ausgeführt.

Der Bediener 2 kann das virtuelle HMI 16 beispielsweise mittels eines Fingers 5 bedienen. Drückt der Bediener 2 hierbei auf einen virtuellen Knopf 162 des virtuellen HMI 16, erfasst diese Bedienhandlung sowohl die erste Kamera 11 sowie auch die zweite Kamera 12. Die daraus resultierenden Bildinformationen werden jeweilig über die Datenverbindung 13 bzw. 14 an die erste bzw. zweite Recheneinheit 31 bzw. 32 weitergegeben. Beispielhaft ist in der Figur auch eine übergeordnete Recheneinheit 33 gezeigt. Die erste Recheneinheit 31 übergibt mittels der Datenverbindung 19 die Bildinformation, die das Bedienen des virtuellen HMI 16 zeigt, an die übergeordnete Steuereinheit 33. Die zweite Recheneinheit 32 übergibt die Bildinformation über die Datenverbindung 20 an die übergeordnete Recheneinheit 33.

Die übergeordnete Recheneinheit 33 kann überprüfen, ob die Bildinformation der ersten Kamera 11 mit der Bildinformation der zweiten Kamera 12 übereinstimmt. Ist dies der Fall, kann eine Aktion, beispielsweise "Start" der Werkzeugmaschine, "Stop" oder auch "Not-Aus", veranlasst werden.

Da sowohl das Erfassen von Bildinformationen als auch die Darstellung des Gesamtbildes zweikanalig und somit redundant erfolgen, ist eine derartige brillenartige Vorrichtung 1 sicher. Stimmen die Bildinformation der ersten Kamera 11 und die Bildinformation der zweiten Kamera 12 nicht überein, wird ein Fehler bzw. eine Störung der brillenartigen Vorrichtung 1 erkannt und die Aktion wird nicht ausgeführt oder gestoppt. Über diese Störung kann der Bediener 2 z. B. mittels eines Anzeigefeldes im Projektionsabbild 15 informiert werden. Ferner kann - beispielsweise durch die übergeordnete Recheneinheit 33 - veranlasst werden, dass die Maschine in einen sicheren Zustand gebracht wird.

Eine Kommunikation von brillenartiger Vorrichtung 1 und Werkzeugmaschine ist beispielsweise mittels Kabel oder auch Funk möglich. Auch eine optische Übertragung von Daten zu Kommunikationszwecken ist denkbar. Die beschriebene brillenartige Vorrichtung 1 ermöglicht eine Integration von sogenannten 3D-Brillen im industriellen Umfeld.

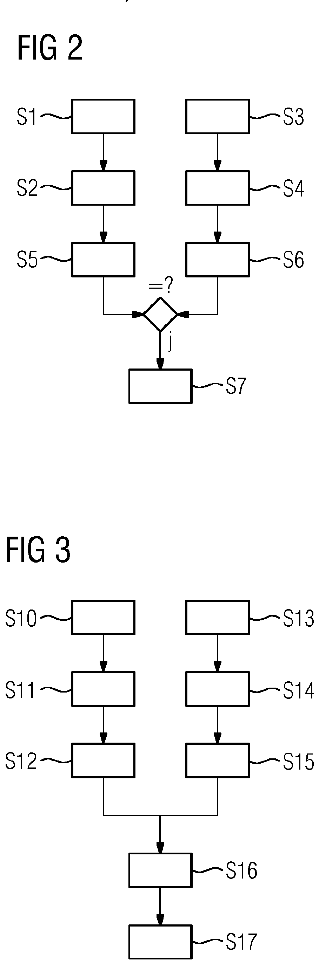

FIG 2 zeigt ein erfindungsgemäßes Verfahren zum Ausführen einer Aktion.

In Verfahrensschritt S1 wird der erste Umgebungsbereich des Bedieners durch die erste Erfassungseinheit erfasst.

In Verfahrensschritt S2 wird der erste Umgebungsbereich in die erste von der ersten Recheneinheit verarbeitbare Bildinformation umgewandelt.

In Verfahrensschritt S5 wird die erste Bildinformation von der ersten Erfassungseinheit an die erste Recheneinheit übergeben.

In Verfahrensschritt S3 wird der zweite Umgebungsbereich des Bedieners durch die zweite Erfassungseinheit erfasst.

In Verfahrensschritt S4 wird der zweite Umgebungsbereich in die zweite von der zweiten Recheneinheit verarbeitbare Bildinformation umgewandelt.

In Verfahrensschritt S6 wird die zweite Bildinformation von der zweiten Erfassungseinheit an die zweite Recheneinheit übergeben.

Stimmen die erste Bildinformation und die zweite Bildinformation überein - in der Figur mit =? gekennzeichnet - wird die Aktion in Verfahrensschritt S7 sicher ausgeführt. Dieser Weg ist in der Figur mit j gekennzeichnet.

Eine Aktion ist beispielsweise "Start", "Stop" oder "Not-Aus" einer Werkzeugmaschine.

FIG 3 zeigt ein erfindungsgemäßes Verfahren zur Darstellung eines Gesamtbildes.

In Verfahrensschritt S10 wird das erste Teilbild durch die erste Recheneinheit generiert.

In Verfahrensschritt S11 wird das erste Teilbild von der ersten Recheneinheit an die erste Anzeigeeinheit übergeben.

In Verfahrensschritt S12 wird das erste Teilbild durch die erste Anzeigeeinheit angezeigt.

In Verfahrensschritt S13 wird das zweite Teilbild durch die zweiten Recheneinheit generiert.

In Verfahrensschritt S14 wird das zweite Teilbild von der zweiten Recheneinheit an die zweite Anzeigeeinheit übergeben.

In Verfahrensschritt S15 wird das zweite Teilbild durch die zweite Anzeigeeinheit angezeigt.

Durch eine Überlagerung des ersten Teilbilds und des zweiten Teilbilds in Verfahrensschritt S16 kann ein Gesamtbild sicher dargestellt werden, da vom Bediener in Verfahrensschritt S17 erkannt wird, ob ein ordnungsgemäßes Gesamtbild vorliegt.

Der Bediener erkennt zudem ein fehlerhaftes Gesamtbild und kann so auf eine defekte brillenartige Vorrichtung schließen.

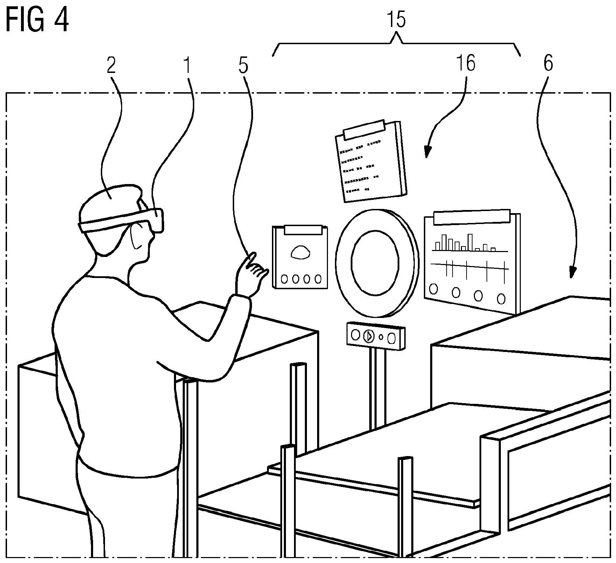

FIG 4 zeigt einen Bediener 2 mit einer brillenartigen Vorrichtung 1 vor einer Werkzeugmaschine 6 sowie ein eingeblendetes Projektionsabbild 15.

Die Figur zeigt, dass der Bediener 2 mit einem Finger 5 auf einen virtuellen Knopf im virtuellen Projektionsabbild 15 drücken möchte. Das Projektionsabbild 15 weist ein HMI 16 auf. Dieses ermöglicht die Interaktion von Bediener 2 und Werkzeugmaschine 6. In der Figur ist das HMI 16 als Teil einer Augmented Reality eingeblendet. Das bedeutet, dass der Bediener 2 ein virtuelles Projektionsabbild 15 des HMI 16 in einer realen Umgebung sieht.

Beispielsweise erfassen die beiden Erfassungseinheiten die Umgebung des Bedieners. Die erfasste Umgebung wird samt virtuellem Projektionsabbild 15 dem Bediener über die beiden Anzeigeeinheiten angezeigt.

## Patentansprüche

1. Brillenartige Vorrichtung (1) zur sicheren Bedienung einer Werkzeugmaschine (6), einer Produktionsmaschine und/oder eines Roboters umfassend:
- eine erste Recheneinheit (31) und eine von der ersten Recheneinheit unabhängige zweite Recheneinheit (32),
- eine erste Anzeigeeinheit (21) und eine von der ersten Anzeigeeinheit unabhängige zweite Anzeigeeinheit (22),
- eine erste Erfassungseinheit (11) und eine von der ersten unabhängige zweite Erfassungseinheit (12),
wobei die erste Erfassungseinheit (11) zur Erfassung eines ersten Umgebungsbereichs (α1) eines Bedieners (2), zur Umwandlung des ersten Umgebungsbereichs (α1) in eine erste von der ersten Recheneinheit (31) verarbeitbare erste Bildinformation und zur Übergabe der ersten Bildinformation an die erste Recheneinheit (31) vorgesehen ist,
wobei die zweite Erfassungseinheit (12) zur Erfassung eines zweiten Umgebungsbereichs (α2) des Bedieners (2), zur Umwandlung des zweiten Umgebungsbereichs (α2) in eine von der zweiten Recheneinheit (32) verarbeitbare zweite Bildinformation und zur Übergabe der zweiten Bildinformation an die zweite Recheneinheit (32) vorgesehen ist,
wobei sich der erste Umgebungsbereich (α1) und der zweite Umgebungsbereich (α2) überschneiden,
wobei die erste Recheneinheit (31) zur Generierung eines ersten Teilbildes (α3) vorgesehen ist,
wobei die erste Recheneinheit (31) zur Übergabe des ersten Teilbildes (α3) an die erste Anzeigeeinheit (21) vorgesehen ist,
wobei die erste Anzeigeeinheit (21) zur Anzeige des ersten Teilbildes (α3) vorgesehen ist,
wobei die zweite Recheneinheit (32) zur Generierung eines zweiten Teilbildes (α4) vorgesehen ist,
wobei die zweite Recheneinheit (32) zur Übergabe des zweiten Teilbildes (α4) an die zweite Anzeigeeinheit (22) vorgesehen ist,
wobei die zweite Anzeigeeinheit (22) zur Anzeige des zweiten Teilbildes (α4) vorgesehen ist,
wobei die brillenartige Vorrichtung (1) zur zweikanaligen Erzeugung und Darstellung eines Gesamtbildes mittels Überlagerung des ersten Teilbildes (α3) und des zweiten Teilbildes (α4) vorgesehen ist,
wobei die brillenartige Vorrichtung (1) eine der ersten (31) und der zweiten Recheneinheit (32) übergeordnete Recheneinheit (33) zum Vergleichen der ersten Bildinformation und der zweiten Bildinformation aufweist,
wobei die brillenartige Vorrichtung (1) als Schnittstelle zwischen einem Bediener und der Werkzeugmaschine (6), der Produktionsmaschine und/oder dem Roboter zur Ausführung einer Aktion durch den Bediener ausgeführt und dazu eingerichtet ist, dass bei Übereinstimmung der ersten Bildinformation und der zweiten Bildinformation vom Bediener eine sichere Aktion als sichere Bedienung der Werkzeugmaschine (6), der Produktionsmaschine und/oder des Roboters in die Wege geleitet wird und bei Nichtübereinstimmung der ersten Bildinformation und der zweiten Bildinformation die Aktion nicht ausgeführt oder gestoppt wird.

2. Brillenartige Vorrichtung (1) Anspruch 1, wobei eine Nichtübereinstimmung der ersten Bildinformation und der zweiten Bildinformation zur Erkennung eines Fehlers und/oder einer Störung der brillenartigen Vorrichtung (1) vorgesehen ist, so dass die Aktion nicht ausgeführt oder gestoppt wird.

3. Brillenartige Vorrichtung (1) nach einem der vorhergehenden Ansprüche, wobei die erste und/oder die zweite Anzeigeeinheit (21, 22) als Display und/oder als Projektor ausgeführt ist.

4. Brillenartige Vorrichtung (1) nach einem der vorhergehenden Ansprüche, wobei die erste Anzeigeeinheit (21) zur Anzeige des ersten Teilbild (α3) einem ersten Auge (3) des Bedieners (2) und die zweite Anzeigeeinheit (22) zur Anzeige des zweiten Teilbild (α4) einem zweiten Auge (4) des Bedieners (2) vorgesehen sind.

5. Brillenartige Vorrichtung (1) nach einem der vorhergehenden Ansprüche, wobei die erste und/oder zweite Erfassungseinheit (11, 12) als Kamera ausgeführt ist.

6. Brillenartige Vorrichtung (1) nach einem der vorhergehenden Ansprüche, wobei die als Kamera ausgeführte Erfassungseinheit (11, 12) wenigstens zwei Dimensionen erfasst.

7. Brillenartige Vorrichtung (1) nach einem der vorhergehenden Ansprüche, wobei die brillenartige Vorrichtung (1) als eine Virtual-Reality-Brille oder Augmented-Reality-Brille ausgebildet ist.

8. Brillenartige Vorrichtung (1) nach einem der vorhergehenden Ansprüche, wobei die brillenartige Vorrichtung (1) vom Bediener (2) als Head-Mounted-Display tragbar ist.

9. Verfahren zur Darstellung eines Gesamtbildes und zum Ausführen einer Aktion mit einer brillenartigen Vorrichtung (1) nach einem der vorhergehenden Ansprüche, wobei das Ausführen der Aktion zweikanalig erfolgt, wobei zweikanalig bezüglich des Ausführens der Aktion bedeutet, dass ein virtueller Schalter oder Taster mit dem Finger des Bedieners (2) betätigt wird, um die Aktion herbeizuführen, wobei von der ersten Erfassungseinheit (11) der erste Umgebungsbereich (α1) erfasst und dies in die erste Bildinformation umgewandelt wird und wobei von der zweiten Erfassungseinheit (12) der zweite Umgebungsbereich (α2) erfasst und dies in die zweite Bildinformation umgewandelt wird und wobei die erste Bildinformation mittels einer Datenverbindung (13) zwischen der ersten Erfassungseinheit und der ersten Recheneinheit (31) an die erste Recheneinheit (31) übergeben wird und die zweite Bildinformation mittels einer Datenverbindung (14) zwischen der zweiten Erfassungseinheit und der zweiten Recheneinheit (32) an die zweite Recheneinheit (32) übergeben wird, wobei die brillenartige Vorrichtung (1) eine der ersten (31) und der zweiten Recheneinheit (32) übergeordnete Recheneinheit (33) zum Vergleichen der ersten Bildinformation und der zweiten Bildinformation aufweist, wobei von der übergeordneten Recheneinheit (33) die erste Bildinformation mit der zweiten Bildinformation verglichen wird und bei Übereinstimmung die Ausführung der Aktion in die Wege geleitet und vom Bediener eine sichere Aktion als sichere Bedienung der Werkzeugmaschine (6), der Produktionsmaschine und/oder des Roboters ausgeführt wird und wobei bei Nichtübereinstimmung der ersten Bildinformation und der zweiten Bildinformation die Aktion nicht ausgeführt oder gestoppt wird.

10. Verfahren nach Anspruch 9, mit folgenden Schritten:
- Erfassen (S1) eines ersten Umgebungsbereichs (α1) eines Bedieners (2) durch eine erste Erfassungseinheit (11),
- Umwandeln (S2) des ersten Umgebungsbereichs (α1) in eine erste von einer ersten Recheneinheit (31) verarbeitbare Bildinformation,
- Erfassen (S3) eines zweiten Umgebungsbereichs (α2) des Bedieners (2) durch eine zweite Erfassungseinheit (32),
- Umwandeln (S4) des zweiten Umgebungsbereichs (α2) in eine zweite von einer zweiten Recheneinheit (32) verarbeitbare Bildinformation,
- Übergeben (S5) der ersten Bildinformation von der ersten Erfassungseinheit (11) an die erste Recheneinheit (31),
- Übergeben (S6) der zweiten Bildinformation von der zweiten Erfassungseinheit (12) an die zweite Recheneinheit (32),
- Vergleichen der ersten Bildinformation und der zweiten Bildinformation durch eine der ersten (31) und der zweiten Recheneinheit (32) übergeordnete Recheneinheit (33), wobei eine Aktion bei Übereinstimmung der ersten Bildinformation und der zweiten Bildinformation sicher ausgeführt wird (S7) .

11. Verfahren nach einem der Ansprüche 9 oder 10,
mit folgenden weiteren Schritten:
- Generieren (S10) eines ersten Teilbilds (α3) durch die erste Recheneinheit (31),
- Übergeben (S11) des ersten Teilbilds (α3) von der ersten Recheneinheit (31) an eine erste Anzeigeeinheit (21),
- Anzeigen (S12) des ersten Teilbilds (α3) durch die erste Anzeigeeinheit (21),
- Generieren (S13) eines zweiten Teilbilds (α4) durch die zweite Recheneinheit (32),
- Übergeben (S14) des zweiten Teilbilds (α4) von der zweiten Recheneinheit (32) an eine zweite Anzeigeeinheit (22),
- Anzeigen (S15) des zweiten Teilbilds (α4) durch die zweite Anzeigeeinheit (22),
- Überlagerung des ersten Teilbilds (α3) und des zweiten Teilbilds (α4) als Gesamtbild (S16).

12. Verfahren nach einem der Ansprüche 9 bis 11, wobei die Darstellung des Gesamtbildes zweikanalig erfolgt, wobei zweikanalig bezüglich der Darstellung des Gesamtbildes bedeutet, dass das erste Teilbild (α3) in der ersten Recheneinheit (31) und das zweite Teilbild (α4) in der zweiten Recheneinheit (32) generiert werden und dass das erste Teilbild (α3) von der ersten Recheneinheit (31) an die erste Anzeigeeinheit (21) und das zweite Teilbild (α4) von der zweiten Recheneinheit (32) an die zweite Anzeigeeinheit (22) übergeben werden.

13. Verfahren nach einem der Ansprüche 9 bis 12, wobei die Aktion als Reaktion auf eine durch den Bediener (2) veranlasste Bedienhandlung ausgeführt wird.

14. Verfahren nach einem der Ansprüche 9 bis 13, wobei die Bedienhandlung als Geste ausgeführt wird.

## Claims

1. Spectacle-type apparatus (1) for the reliable operation of a machine tool (6), a production machine and/or a robot, comprising:
- a first computing unit (31) and a second computing unit (32) independent from the first computing unit,
- a first display unit (21) and a second display unit (22) independent from the first display unit,
- a first registration unit (11) and a second registration unit (12) independent from the first registration unit,
wherein the first registration unit (11) is provided to register a first surrounding region (α1) of an operator (2), to convert the first surrounding region (α1) into a first item of image information, which can be processed by the first computing unit (31), and to pass the first item of image information to the first computing unit (31),
wherein the second registration unit (12) is provided to register a second surrounding region (α2) of the operator (2), to convert the second surrounding region (α2) into a second item of image information, which can be processed by the second computing unit (32), and to pass the second item of image information to the second computing unit (32),
wherein the first surrounding region (α1) and the second surrounding region (α2) overlap,
wherein the first computing unit (31) is provided to generate a first partial image (α3),
wherein the first computing unit (31) is provided to pass the first partial image (α3) to the first display unit (21), wherein the first display unit (21) is provided to display the first partial image (α3),
wherein the second computing unit (32) is provided to generate a second partial image (α4),
wherein the second computing unit (32) is provided to pass the second partial image (α4) to the second display unit (22), wherein the second display unit (22) is provided to display the second partial image (α4),
wherein the spectacle-type apparatus (1) is provided to generate and display a full image using two channels by overlaying the first partial image (α3) and the second partial image (α4),
wherein the spectacle-type apparatus (1) has a higher-level computing unit (33) associated with the first (31) and the second computing unit (32) for comparing the first item of image information and the second item of image information,
wherein the spectacle-type apparatus (1) is embodied as an interface between an operator and the machine tool (6), the production machine and/or the robot to enable an action to be carried out by the operator and is configured so that, if the first item of image information and the second item of image information coincide, a reliable action is initiated by the operator as a reliable operation of the machine tool (6), the production machine and/or the robot, and if the first item of image information and the second item of image information do not coincide, the action is not carried out or is stopped.

2. Spectacle-type apparatus (1) according to claim 1, wherein it is provided that, if the first item of image information and the second item of image information do not coincide, this identifies an error and/or malfunction of the spectacle-type apparatus (1), so that the action is not carried out or is stopped.

3. Spectacle-type apparatus (1) according to one of the preceding claims, wherein the first and/or the second display unit (21, 22) is embodied as a display and/or as a projector.

4. Spectacle-type apparatus (1) according to one of the preceding claims, wherein the first display unit (21) is provided to show the first partial image (α3) to a first eye (3) of the operator (2) and the second display unit (22) is provided to show the second partial image (α4) to a second eye (4) of the operator (2).

5. Spectacle-type apparatus (1) according to one of the preceding claims, wherein the first and/or second registration unit (11, 12) is embodied as a camera.

6. Spectacle-type apparatus (1) according to one of the preceding claims, wherein the registration unit (11, 12) embodied as a camera registers at least two dimensions.

7. Spectacle-type apparatus (1) according to one of the preceding claims, wherein the spectacle-type apparatus (1) is embodied as virtual reality glasses or augmented reality glasses.

8. Spectacle-type apparatus (1) according to one of the preceding claims, wherein the spectacle-type apparatus (1) can be worn by the operator (2) as a head-mounted display.

9. Method for depicting a full image and/or for carrying out an action with a spectacle-type apparatus (1) according to one of the preceding claims, wherein the action is carried out using two channels, wherein the use of two channels to carry out the action means that a virtual switch or button is actuated with the finger of the operator (2) in order to bring about the action, wherein the first surrounding region (α1) is registered by the first registration unit (11) and converted into the first item of image information and wherein the second surrounding region (α2) is registered by the second registration unit (12) and converted into the second item of image information and wherein the first item of image information is passed to the first computing unit (31) by means of a data connection (13) between the first registration unit and the first computing unit (31) and the second item of image information is passed to the second computing unit (32) by means of a data connection (14) between the second registration unit and the second computing unit (32), wherein the spectacle-type apparatus (1) has a higher-level computing unit (33) associated with the first (31) and the second computing unit (32) for comparing the first item of image information and the second item of image information, wherein the first item of image information is compared with the second item of image information by the higher-level computing unit (33) and, if these coincide, the execution of the action is initiated and an action is carried out reliably by the operator as a reliable operation of the machine tool (6), the production machine and/or the robot and wherein, if the first item of image information and the second item of image information do not coincide, the action is not carried out or is stopped.

10. Method according to claim 9,
having the following steps:
- Registering (S1) a first surrounding region (α1) of an operator (2) by means of a first registration unit (11),
- Converting (S2) the first surrounding region (α1) into a first item of image information, which can be processed by a first computing unit (31),
- Registering (S3) a second surrounding region (α2) of the operator (2) by means of a second registration unit (32),
- Converting (S4) the second surrounding region (α2) into a second item of image information, which can be processed by a second computing unit (32),
- Passing (S5) the first item of image information from the first registration unit (11) to the first computing unit (31),
- Passing (S6) the second item of image information from the second registration unit (12) to the second computing unit (32),
- Comparing the first item of image information and the second item of image information by way of a higher-level computing unit (33) associated with the first (31) and the second computing unit (32), wherein an action is carried out reliably (S7) if the first item of image information and the second item of image information coincide.

11. Method according to one of claims 9 or 10,
having the following further steps:
- Generating (S10) a first partial image (α3) by means of the first computing unit (31),
- Passing (S11) the first partial image (α3) from the first computing unit (31) to a first display unit (21),
- Displaying (S12) the first partial image (α3) by means of the first display unit (21),
- Generating (S13) a second partial image (α4) by means of the second computing unit (32),
- Passing (S14) the second partial image (α4) from the second computing unit (32) to a second display unit (22),
- Displaying (S15) the second partial image (α4) by means of the second display unit (22),
- Overlaying the first partial image (α3) and the second partial image (α4) as a full image (S16).

12. Method according to one of claims 9 to 11, wherein the full image is depicted using two channels, wherein the use of two channels to depict the full image means that the first partial image (α3) is generated in the first computing unit (31) and the second partial image (α4) is generated in the second computing unit (32) and that the first partial image (α3) is passed from the first computing unit (31) to the first display unit (21) and the second partial image (α4) is passed from the second computing unit (32) to the second display unit (22) .

13. Method according to one of claims 9 to 12, wherein the action is carried out as a reaction to an operator action initiated by the operator (2).

14. Method according to one of claims 9 to 13, wherein the operator action is carried out as a gesture.

## Revendications

1. Dispositif (1) de type lunette pour commander de manière fiable une machine-outil (6), une machine de production et/ou un robot, comprenant :
- une première unité (31) de calcul et une deuxième unité (32) de calcul indépendante de la première unité de calcul,
- une première unité (21) d'affichage et une deuxième unité (22) d'affichage indépendante de la première unité d'affichage,
- une première unité (11) de détection et une deuxième unité (12) de détection indépendante de la première,
dans lequel la première unité (11) de détection est prévue pour la détection d'un premier domaine (α1) ambiant d'un opérateur (2), pour la transformation du premier domaine (α1) ambiant en une première information d'image pouvant être traitée par la première unité (31) de calcul et pour la transmission de la première information d'image à la première unité (31) de calcul, dans lequel la deuxième unité (12) de détection est prévue pour la détection d'un deuxième domaine (α2) ambiant de l'opérateur (2), pour la transformation du deuxième domaine (α2) ambiant en une deuxième information d'image pouvant être traitée par la deuxième unité (32) de calcul et pour la transmission de la deuxième information d'image à la deuxième unité (32) de calcul,
dans lequel le premier domaine (α1) ambiant et le deuxième domaine (α2) ambiant se recoupent,
dans lequel la première unité (31) de calcul est prévue pour la création d'une première image (α3) partielle,
dans lequel la première unité (31) de calcul est prévue pour la transmission de la première image (α3) partielle à la première unité (21) d'affichage,
dans lequel la première unité (21) d'affichage est prévue pour l'affichage de la première image (α3) partielle,
dans lequel la deuxième unité (32) de calcul est prévue pour la création d'une deuxième image (α4) partielle,
dans lequel la deuxième unité (32) de calcul est prévue pour la transmission de la deuxième image (α4) partielle à la deuxième unité (22) d'affichage,
dans lequel la deuxième unité (22) d'affichage est prévue pour l'affichage de la deuxième image (α4) partielle,
dans lequel le dispositif (1) de type lunette est prévu pour la production à deux canaux et la représentation d'une image d'ensemble, au moyen d'une superposition de la première image (α3) partielle et de la deuxième image (α4) partielle,
dans lequel le dispositif (1) de type lunette a, pour la comparaison de la première information d'image et de la deuxième information d'image, une unité (33) de calcul supérieure hiérarchiquement à la première (31) et à la deuxième unité (32) de calcul,
dans lequel le dispositif (1) de type lunette est réalisé sous la forme d'une interface entre un opérateur et la machine-outil (6), la machine de production et/ou le robot pour la réalisation d'une action par l'opérateur et est agencé, de manière à ce que, si la première information d'image et la deuxième information d'image coïncident, une action fiable comme commande fiable de la machine-outil (6), de la machine de production et/ou du robot est mise en route par l'opérateur et si la première information d'image et la deuxième information d'image ne coïncident pas, l'action n'est pas réalisée ou est arrêtée.

2. Dispositif (1) de type lunette suivant la revendication 1, dans lequel une non coïncidence de la première information d'image et de la deuxième information d'image est prévue pour la détection d'un défaut ou d'une perturbation du dispositif (1) de type lunette, de sorte que l'action n'est pas réalisée ou est arrêtée.

3. Dispositif (1) de type lunette suivant l'une des revendications précédentes, dans lequel la première et/ou la deuxième unité (21, 22) d'affichage est réalisée sous la forme d'un affichage et/ou d'un projecteur.

4. Dispositif (1) de type lunette suivant l'une des revendications précédentes, dans lequel la première unité (21) d'affichage est prévue pour l'affichage de la première image (α3) partielle à un premier oeil (3) de l'opérateur (2) et la deuxième unité (22) d'affichage est prévue pour l'affichage de la deuxième image (α4) partielle à un deuxième oeil (4) de l'opérateur (2).

5. Dispositif (1) de type lunette suivant l'une des revendications précédentes, dans lequel la première et/ou la deuxième unité (11, 12) de détection est réalisée sous la forme d'un appareil photographique.

6. Dispositif (1) de type lunette suivant l'une des revendications précédentes, dans lequel l'unité (11, 12) de détection, réalisée sous la forme d'un appareil photographique, détecte au moins deux dimensions.

7. Dispositif (1) de type lunette suivant l'une des revendications précédentes, dans lequel le dispositif (1) de type lunette est constitué sous la forme d'une lunette à réalité virtuelle ou d'une lunette à réalité augmentée.

8. Dispositif (1) de type lunette suivant l'une des revendications précédentes, dans lequel le dispositif (1) de type à lunette peut être porté par l'opérateur (2) comme écran à monter sur la tête.

9. Procédé de représentation d'une image d'ensemble et d'exécution d'une action par un dispositif (1) de type lunette suivant l'une des revendications précédentes, dans lequel l'exécution de l'action s'effectue par deux canaux, dans lequel deux canaux se rapportant à l'exécution de l'action signifie qu'un interrupteur ou palpeur virtuel est actionné par le doigt de l'opérateur (2) afin de provoquer l'action, dans lequel on détecte par la première unité (11) de détection le premier domaine (α1) ambiant, et on transforme celui-ci en la première information d'image et dans lequel on détecte par la deuxième unité (12) de détection le deuxième domaine (α2) ambiant et on transforme celui-ci en la deuxième information d'image et dans lequel on transmet la première information d'image à la première unité (31) de calcul, au moyen d'une liaison (13) de données entre la première unité de détection et la première unité (31) de calcul, et la deuxième information d'image à la deuxième unité (32) de calcul au moyen d'une liaison (14) de données entre la deuxième unité de détection et la deuxième unité (32) de calcul, dans lequel le dispositif (1) de type lunette a, pour la comparaison de la première information d'image et de la deuxième information d'image, une unité (33) de calcul supérieure hiérarchiquement à la première (31) et à la deuxième unité (32) de calcul, dans lequel on compare par l'unité (33) de calcul supérieure hiérarchiquement, la première information d'image à la deuxième information d'image et, s'il y a coïncidence, on met en route l'exécution de l'action et on exécute par l'opérateur une action fiable comme commande fiable de la machine-outil (6), de la machine de production et/ou du robot et dans lequel, s'il n'y a pas coïncidence de la première information d'image et de la deuxième information d'image, on n'exécute pas ou on arrête l'action.

10. Procédé suivant la revendication 9,
comprenant les stades suivants :
- détection (S1) d'un premier domaine (α1) ambiant d'un opérateur (2) par une première unité (11) de détection,
- transformation (S2) du premier domaine (α1) ambiant en une première information d'image pouvant être traitée par une première unité (31) de calcul,
- détection (S3) d'un deuxième domaine (α2) ambiant de l'opérateur (2) par une deuxième unité (32) de détection,
- transformation (S4) du deuxième domaine (α2) ambiant en une deuxième information d'image pouvant être traitée par une deuxième unité (32) de calcul,
- transmission (S5) de la première information d'image de la première unité (11) de détection à la première unité (31) de calcul,
- transmission (S6) de la deuxième information d'image de la deuxième unité (12) de détection à la deuxième unité (32) de calcul,
- comparaison de la première information d'image et de la deuxième information d'image par une unité (33) de calcul supérieure hiérarchiquement à la première (31) et la deuxième (32) unité de calcul, dans lequel on exécute (S7) de manière fiable une action, si la première information d'image et la deuxième information d'image coïncident.

11. Procédé suivant l'une des revendications 9 ou 10, comprenant les autres stades suivants :
- création (S10) d'une première image (α3) partielle par la première unité (31) de calcul,
- transmission (S11) de la première image (α3) partielle de la première unité (31) de calcul à une première unité (21) d'affichage,
- affichage (S12) de la première image (α3) partielle par la première unité (21) d'affichage,
- création (S13) d'une deuxième image (α4) partielle par la deuxième unité (32) de calcul,
- transmission (S14) de la deuxième image (α4) partielle de la deuxième unité (32) de calcul à une deuxième unité (22) d'affichage,
- affichage (S15) de la deuxième image (α4) partielle par la deuxième unité (22) d'affichage,
- superposition de la première image (α3) partielle et de la deuxième image (α4) partielle comme image (S16) d'ensemble.

12. Procédé suivant l'une des revendications 9 à 11, dans lequel la représentation de l'image d'ensemble s'effectue par deux canaux, dans lequel deux canaux se rapportant à la représentation de l'image d'ensemble signifie que l'on crée la première image (α3) partielle dans la première unité (31) de calcul et la deuxième image (α4) partielle dans la deuxième unité (32) de calcul et que l'on transmet la première image (α3) partielle de la première unité (31) de calcul à la première unité (21) d'affichage et la deuxième image (α4) partielle de la deuxième unité (32) de calcul à la deuxième unité (22) d'affichage.

13. Procédé suivant l'une des revendications 9 à 12, dans lequel on exécute l'action en réaction à une manipulation provoquée par l'opérateur (2).

14. Procédé suivant l'une des revendications 9 à 13, dans lequel on exécute la manoeuvre sous la forme d'un geste.
